# EUROPEAN PATENT SPECIFICATION

(11) **EP 2 355 587 B1**
(45) Date of publication and mention of the grant of the patent: **23.07.2014**
(21) Application number: 10360006.0
(22) Date of filing: 28.01.2010
(51) Int. Cl.: H04W 48/14, H04W 8/22, H04W 60/04, H04W 84/04

(54) **Base station indication**
Basisstationsanzeige
Indication de station de base

(43) Date of publication of application: 10.08.2011
(73) Proprietor: Alcatel Lucent, 75007 Paris (FR)
(72) Inventor: Shahid, Malek, Chippenham Wiltshire, SN14 0TJ (GB); Skeates, Mark, Bath, BA1 4PA (GB); Brend, Graham, Bathford Bath, BA1 7UE (GB)
(74) Representative: Sarup, David Alexander

(56) References cited:
- WO-A1-2007/117184
- WO-A1-2009/071693
- WO-A1-2009/149761
- WO-A2-98/42151
- TELECOM ITALIA: "Home Cell indicator", 3GPP DRAFT; S1-071575 (CR TO 22.101 HOME CELL INDICATOR), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG1, no. Ljubljana; 20071023, 23 October 2007 (2007-10-23), XP050227548, [retrieved on 2007-10-23]

## Description

### FIELD OF THE INVENTION

The present invention relates to methods of proving an indication of a base station of a wireless communication network, user equipment and a network node.

### BACKGROUND

Wireless telecommunication networks are known. In a cellular system, radio coverage is provided by areas known as cells. A base station is located in each cell to provide radio coverage. Traditional base stations provide coverage in relatively large geographical areas and the cells are often referred to as macro cells. It is possible to provide smaller sized cells within a macro cell. Such smaller sized cells are sometimes referred to as micro cell, pico cells or femto cells. Hereinafter, the term femto cells will be used to refer to such smaller sized cells. One way to establish a femto cell is to provide a femto base station that provides coverage having a relatively limited range, typically within the coverage area of a macro cell. The transmission power of a femto base station is relatively low and, hence, each femto cell provides a small coverage area compared to that of a macro cell and covers, for example, an office or a home.

Such femto cells are typically provided where the communications coverage provided by the macro cell is poor or where a user wishes to use an alternative communications link provided locally, by the femto base station, to communicate with the core network. Such a situation might arise where, for example, a user has a pre-existing communications link and the user wishes to utilise that link in preference to that provided by a macro cell network provider to communicate with the core network.

In order to be integrated within the network, femto base stations need to exchange signalling messages between themselves and various network nodes within the network. The femto base stations then appear as one or more network nodes. Femto base stations are normally grouped into clusters. Each femto base station cluster behaves like a single radio network controller (RNC) when communicating with a serving general packet radio service support node (SGSN) in an existing packet switched core network or when communicating with a message switching centre (MSC) in an existing circuit switched core network. However, since a typical network architecture does not envisage RNC functionality to be geographically dispersed across a large number of network nodes, it becomes necessary to deploy a gateway for each cluster of femto cells. This gateway terminates the signalling between the traditional core network nodes and the femto cell cluster, thereby creating the notion of a single virtual RNC. This virtual RNC represents the femto cell cluster as a whole.

It is envisaged that a user will be free to roam between the macro network and the femto network and, hence, will attach and detach to and from macro and femto cells. However, as the number of base stations to which user equipment may connect increases, it becomes more important to ensure that the user equipment is being supported by the intended base station. Accordingly, it is desired to provide a technique for improving information indicating which base station the user equipment is connected to.

WO 98/42151 discloses that a register correlating a number of different home zones with a particular subscription is associated with a home location register. A different geographic location, effective time period and corresponding charging rate can be associated with each home zone. In response to a request to establish a call connection with a particular mobile station travelling within its coverage area, a serving mobile switching centre communicates with the associated home location register to determine which home zone is currently effective for the relevant mobile station. The serving mobile switching centre then determines whether the mobile station is currently located within the determined home zone. In response to an affirmative determination, a corresponding reduced charging rate is applied towards the resulting call connection.

WO 2007/117184 discloses a method in a telecommunications system to indicate tariff-related information to an end user with an ability to access network areas with different charging tariffs.

WO 2009/149761 discloses a method for selecting a target access point for connecting a user equipment to a target network. Access points may be assigned different category tags, such as "home" or "office". From this information, the user equipment can determine which access point to connect to in preference to another.

### SUMMARY

According to one aspect, there is provided a network node method as claimed in claim 1.

The first aspect recognises that as the number of deployed femto base stations increases, the likelihood increases that the user equipment may be supported by a base station other than a base station the user desires to support the user equipment. However, the information that is currently available to the user to enable them to determine which base station the user equipment is attached to is limited. For example, the femto base station typically broadcasts a simple a basic text string which may be unable to provide the level of information that may be required by the user to clearly indicate the base station which the user equipment is attached to. Also, such broadcast text strings may be short and, if user defined, may lead to some confusion if the broadcast name selected is identical or similar for independent, closely located femto cells. Indeed, it is possible that should two broadcast names be identical, then no indication would be provided to the user that the user equipment is now being supported by a different base station to that which was intended. Furthermore, by relying solely on a change in the broadcast name, a change in the base station may go unnoticed during an active call.

Accordingly, the occurrence of a mobility event is detected. This mobility event indicates the relocation of the user equipment from one base station to another. By detecting the mobility event, it is possible to determine that a relocation has taken place even if the broadcast names of the base stations involved in the relocation are identical. When such a mobility event occurs, a control message is transmitted to the user equipment. This control message encodes one or more triggers. Those triggers, when received by the user equipment, will cause the user equipment to perform predetermined processing in response to those triggers. That predetermined processing then provides the required indication to the user regarding the base station currently supporting the user equipment. In this way, it can be seen that each time a relocation occurs, a trigger is sent to the user equipment to cause the user equipment to activate a predefined routine to cause information to be provided to the user regarding the base station that is currently supporting the user equipment. It will be appreciated that this provides for a more reliable way of identifying to the user when a change occurs in the base station supporting the user equipment and provides for a flexible technique to enable a wide variety of ways of indicating that change to the user.

For example, the network node may store an indication of each base station, together with an indication of the trigger or triggers which need to be sent to user equipment when that base station is connected to. Likewise, each user equipment may store a list of different triggers, together with the associated processes which should be performed upon receipt of that trigger. Hence, should the user equipment need to perform a particular process when connecting to a base station to indicate to a user that the connection has occurred, then all the network node needs to do is to send a control message to the user equipment containing the correct trigger to cause that user equipment to perform the required process.

Should no or insufficient information already be stored by the user equipment regarding the base station now supporting that user equipment, a trigger may be sent to the user equipment to activate a process for receiving that information from the network node. The user equipment may then provide the appropriate indications to the user based on the information transmitted by the network node. That information may then be stored by the user equipment for subsequent reuse, if required.

The information may also provide an indication of other devices which are connected to the base station, such as would occur in a home femto cell where domestic and multi-media devices may communicate with each other to enable data routing without needing to communicate with the core network. Again, these devices may be represented by icons, if appropriate.

In one embodiment, one predefined trigger causes the user equipment to perform a predefined operating procedure to access information stored in the user equipment providing the indication of the base station to the user. Accordingly, the network node may transmit a trigger to the user equipment to cause the user equipment to activate a process which accesses information already stored in the user equipment. In particular, the user equipment may store particular base station information in memory and the trigger may cause the user equipment to activate a process to retrieve the appropriate base station information from memory to provide to the user. For example, the user equipment may store information relating to macro base stations provided by the operator's macro network, information relating to the user's own femto base stations (such as their home, office or other base stations to which they are subscribed) and information indicating an unknown femto base station which has no association with the user. When connecting to a macro base station, a trigger may be sent to the user equipment activating a process to access the information to be indicated to the user relating to the network operator's macro base stations. This information may then be provided to the user in an audio and/or visual and/or other format to provide an alert to the user that the user equipment is now connected to the macro network. It will be appreciated that providing an audio indication may be particularly effective at indicating a change in base station during an active call. Likewise, When connecting to a known femto base station, a trigger may be received by the user equipment causing it to activate a process to access information relating to the femto base station with which it is associated in a similar manner to that described above. Similarly, when connecting to an unknown base station, a further trigger may be sent to the user equipment to cause it to activate a process to cause information relating to a femto base station with which the user equipment is not associated to be provided to the user. In this way, it can be seen that pre-programmed information stored in the user equipment may readily be accessed in response to a trigger sent by the network node.

In one embodiment, the step of transmitting comprises: transmitting the information from the network node to the user equipment using a messaging service. Hence, existing techniques such as messaging may be utilised by the network node to transmit the information to the user equipment.

In one embodiment, one predefined trigger causes the user equipment to perform a predefined operating procedure to extract information contained in the control message to provide the indication of the base station to the user. Likewise, the control message itself may include information which has been encoded in the control message relating to the base station now connected to. The trigger sent to the user equipment may cause that user equipment to activate a procedure to enable that encoded information to be extracted and then utilised by the user equipment. That information may then be stored by the user equipment for subsequent reuse, if required.

In one embodiment, the method comprises the step of: determining capabilities of the user equipment and wherein the control message contains at least one predefined trigger associated with both the base station and the capabilities of the user equipment. In one embodiment, the method comprises the step of: determining an identity of the user equipment and wherein the control message contains at least one predefined trigger associated with both the base station and the identity of the user equipment. Accordingly, the capabilities of the user equipment or the identity of the user equipment may be determined by the network node. It will be appreciated that this determination may be made either in response to an interrogation of the user equipment made by the network node or based on previously collected information relating to that user equipment. The trigger provided is then based on both the base station and the capabilities of the user equipment, or based on the base station and the identity of the user equipment. By providing a trigger based on these combinations of the base station and the user equipment it is possible to ensure that a trigger appropriate to the capabilities of the user equipment is transmitted. For example, some triggers may only be reserved for connections to a base station by user equipment having enhanced capabilities whereas other triggers may be reserved for connections to the same base stations by user equipment having reduced capabilities. In particular, only those triggers which are associated with processes which are supported by the user equipment will be sent to avoid the user equipment being sent a trigger for which it has no corresponding process which can be performed. Likewise, some triggers may be only available for identified user equipment when being supported by a particular base station. For example, in a closed access femto architecture, one trigger may be provided to those user equipment which are subscribed to a particular femto base station, whereas another trigger may be provided to user equipment which are not subscribed to the femto base station. Likewise, preferred users at a particular location may be given preferential access to a femto base station, or the femto base station provider may wish to provide specific information to particular users and the appropriate trigger to cause the user equipment to perform the appropriate process to enable that information to be provided to the user may be sent.

In one embodiment, the information comprises at least one of an image representing the base station, an indication of services provided by the base station and an indication of an operator of the base station. Accordingly, the information provided to the user equipment may include an image representation of the base station. For example, the image may be provided by the network, pre-stored in the user equipment, or may be user defined. In particular, the user equipment may include a default image for the macro base stations and femto base stations, either pre-stored in the user equipment or downloaded from the network. However, the user may change these to suit the requirements of that user and help the user better identify those base stations. Likewise, the information may include an indication of the services provided by the base station such as, for example, its data rate and the type of voice and data services available (these may be represented by icons if appropriate). Similarly, the information may provide an indication of an operator of the base station. For example, the information may indicate that the base station is being operated by a particular enterprise and identify that enterprise to the user. For example, the information may indicate that the base station is being provided by a particular shop and may provide details of that shop and any charging regime applicable to using that femto base station, together with any user specific information that may be appropriate for that user. Likewise, the information in addition to being visual may also be audible to alert the user to a change in supporting base station. In fact, any appropriate indication through audio, visual, tactile or other mechanism may be provided to the user.

According to a second aspect, there is provided a network node as claimed in claim 7.

In one embodiment, one predefined trigger causes the user equipment to perform a predefined operating procedure to access information stored in the user equipment providing the indication of the base station to the user.

In one embodiment, the transmission logic is operable to transmit the information from the network node to the user equipment using a messaging service.

In one embodiment, one predefined trigger causes the user equipment to perform a predefined operating procedure to extract information contained in the control message to provide the indication of the base station to the user.

In one embodiment, the network node comprises determination logic operable to determine capabilities of the user equipment and wherein the control message contains at least one predefined trigger associated with both the base station and the capabilities of the user equipment.

In one embodiment, the network node comprises determination logic operable to determine an identity of the user equipment and wherein the control message contains at least one predefined trigger associated with both the base station and the identity of the user equipment.

In one embodiment, the information comprises at least one of an image representing the base station, an indication of services provided by the base station and an indication of an operator of the base station.

According to a third aspect, there is provided a user equipment method as claimed in claim 8.

In one embodiment, the step of performing comprises: performing, in response to one predefined trigger, a predefined operating procedure to utilise information stored in the user equipment providing the indication of the base station to the user.

In one embodiment, the step of receiving comprises: receiving the information from the network node using a messaging service.

In one embodiment, the step of performing comprises: performing, in response to one predefined trigger, a predefined operating procedure to extract information contained in the control message providing the indication of the base station to the user.

In one embodiment, the information comprises at least one of an image representing the base station, an indication of services provided by the base station and an indication of an operator of the base station.

According to a fourth aspect, there is provided user equipment as claimed in claim 9.

In one embodiment, the processing logic is operable to perform, in response to one predefined trigger, a predefined operating procedure to utilise information stored in the user equipment providing the indication of the base station to the user.

In one embodiment, the reception logic is operable to receive the information from the network node using a messaging service.

In one embodiment, the processing logic is operable to perform, in response to one predefined trigger, a predefined operating procedure to extract information contained in the control message providing the indication of the base station to the user.

In one embodiment, the information comprises at least one of an image representing the base station, an indication of services provided by the base station and an indication of an operator of the base station.

According to a fifth aspect, there is provided a computer program product operable, when executed on a computer, to perform the method steps of the first and third aspects.

Further particular and preferred aspects are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

Embodiments of the present invention will now be described further, with reference to the accompanying drawings, in which:
Figure 1 illustrates the main components of a wireless telecommunications network according to one embodiment;
Figure 2 illustrates a general femto cell deployment within one macro cell shown in
Figure 1;

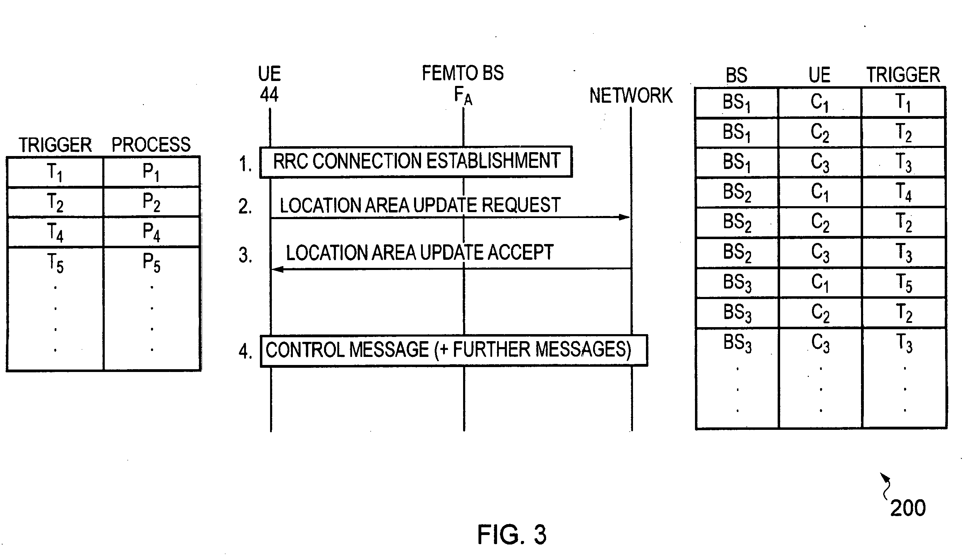

Figure 3 illustrates schematically the operation of user equipment and a network node according to one embodiment.

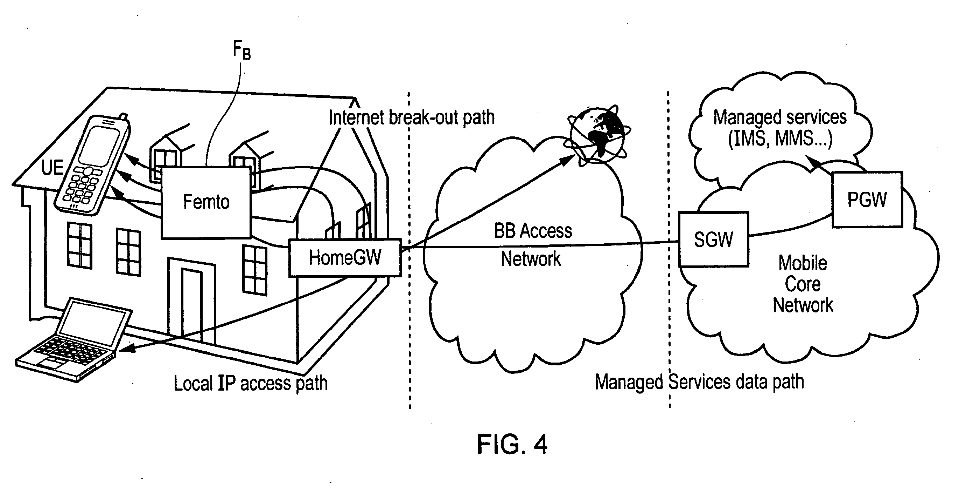

Figure 4 illustrates schematically the arrangement of user equipment when attached to a home femto base station; and

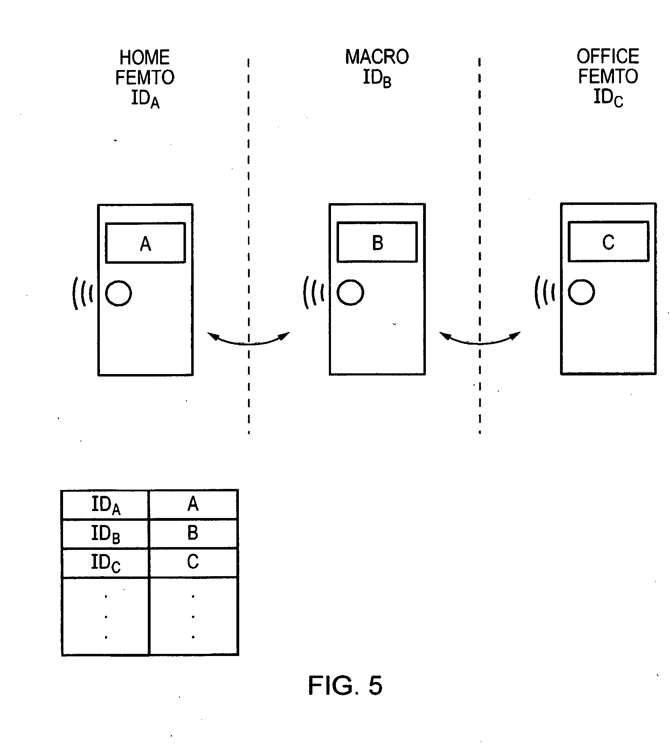

Figure 5 illustrates a technique for providing information relating to the base station to which user equipment is attached according to one embodiment.

### DESCRIPTION OF THE EMBODIMENTS

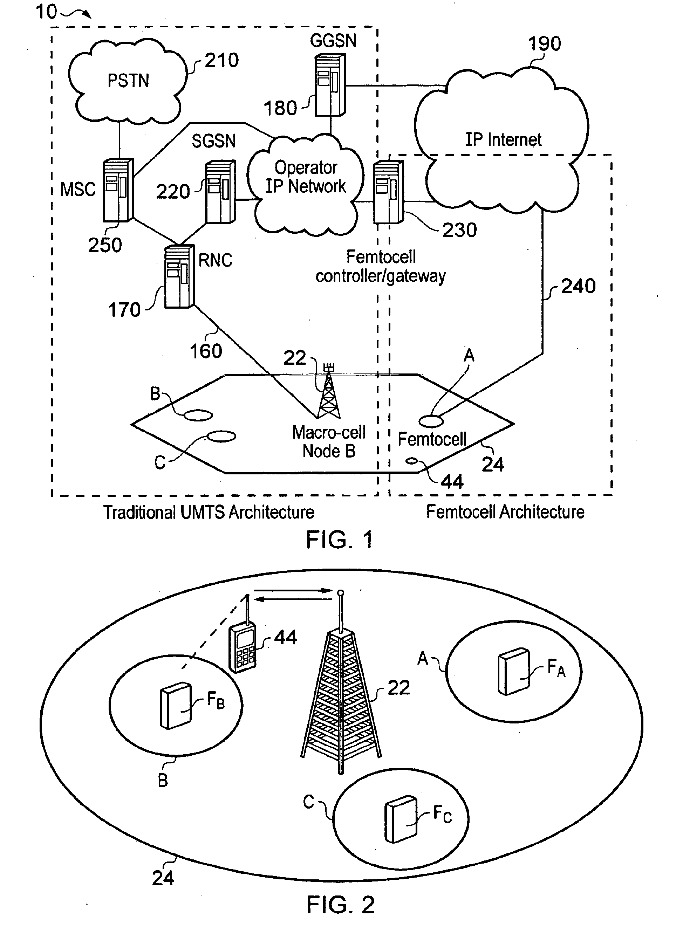

Figure 1 illustrates a wireless communication network, generally 10, according to one embodiment. User equipment 44 roam through the wireless communication network 10. Base stations 22 are provided which support respective macro cells 24. A number of such base stations are provided, which are distributed geographically in order to provide a wide area of coverage to the user equipment 44. When user equipment 44 is within a macro cell 24 supported by the base station 22 then communications may be established between the user equipment 44 and the base station 22 over an associated radio link. Each base station typically supports a number of sectors. Typically, a different antenna within a base station supports an associated sector. Accordingly, each base station has multiple antennas and signals sent through the different antennas are electronically weighted to provide a sectorised approach. Of course, it will be appreciated that Figure 1 illustrates a small subset of the total number of user equipment and base stations that may be present in a typical communications system.

The wireless communication network 10 is managed by a radio network controller 170. The radio network controller 170 controls the operation of the wireless communications network 10 by communicating with the base stations 22 over a backhaul communications link 160. The network controller 170 also communicates with the user equipment 44 via their respective radio links in order to efficiently manage the wireless communication network 10.

The radio network controller 170 maintains a neighbour list which includes information about the geographical relationship between cells supported by base stations. In addition, the radio network controller 170 maintains location information which provides information on the location of the user equipment within the wireless communications network 10. The radio network controller 170 is operable to route traffic via circuit-switched and packet-switched networks. Hence, a mobile switching centre 250 is provided with which the radio network controller 170 may communicate. The mobile switching centre 250 then communicates with a circuit-switched network such as a public switched telephone network (PSTN) 210. Likewise, the network controller 170 communicates with serving general packet radio service support nodes (SGSNs) 220 and a gateway general packet radio support node (GGSN) 180. The GGSN then communicates with a packet-switch core 190 such as, for example, the Internet.

As shown in more detail in Figure 2, there are provided femto cell base stations F_{A} to Fc, each of which provides a femto cell A to C in the vicinity of a building within which the associated femto cell base station is installed. The femto cells A to C provide local communications coverage for a user in the vicinity of those buildings. Each femto cell base station F_{A} to F_{c} communicates via a femto cell controller/gateway 230. A handover or camping event is initiated between the base station 22 and the femto cell base stations F_{A} to F_{c} when the user equipment provides a measurement report to the macro base station which indicates that the femto base stations F_{A}, to F_{c} are within range. The femto cell base stations F_{A} to F_{c} typically utilise the user's broadband Internet connection 240 (such as ADSL, Cable, Ethernet, etc.) as a backhaul.

Femto cell base stations F_{A} to F_{c} are lower-power, low-cost, user-deployed base stations that provide a high cellular quality of service in residential or enterprise environment. In contrast to current macro cell approaches where complex and highly reliable base stations are deployed to strategic locations decided by the network owner, the femto cell base stations F_{A} to F_{c} are provided locally by customers. Such femto cell base stations F_{A} to F_{c} provide local coverage in areas of the macro network where quality of service may be low. Hence, the femto cell base stations F_{A} to F_{c} provide for improved quality of service in areas which are difficult for network operators. To reduce the cost of the femto base stations F_{A} to F_{c} and to reduce complexity and interference effects of the femto cell on other user equipment within the macro cell, the transmission power of the femto cell base station F_{A} to F_{c} is relatively low in order to restrict the size of the femto cell to a range of tens of metres or less. The femto cell base stations F_{A} to F_{c} have extensive auto-configuration and self-optimisation capability to enable a simple plug-and-play deployment. As such, they are designed to automatically integrate themselves into an existing macro cellular wireless network 10. In addition, some access point within the macro cellular network contains some functionality traditionally provided by the core network.

It is generally the case that user equipment 44 will be free to roam between the macro network and the femto network and, hence, will attach and detach to and from macro cells and femto cells. That is to say that when in the inactive mode, user equipment 44 will camp from one base station to another, and will either handover or hand in when in the active mode. When user equipment 44 is supported by a femto base station, benefits are provided to the macro network operator since this assists in off loading user traffic onto the user's Internet protocol (IP) backhaul 240. Off loading traffic is obviously of benefit to the macro network operator and, hence, as an incentive for end users to purchase a femto base station, it is common for the macro network operator to provide differential charging schemes between use of the macro and the femto network. For example, a user would typically be billed at a lower rate when attached to a femto base station than when they are attached to a macro base station. Also, femto base stations provide for fixed and mobile convergence by providing hub functionality at home, in the office or at other locations, as shown in Figure 4. This hub functionality may facilitate local data routing where devices attached to the femto base station can communicate with each other without the need to utilise the macro network.

It is therefore desirable for the user to know when their user equipment is attached to a femto base station in preference to a macro base station. Also, it is desirable for the user to be provided with additional information regarding the services that may be available when they are attached to a specific base station. For example certain femto base stations may allow routing of information between the user equipment and other devices within the femto cell location such as between the user equipment and a PC, display or printer at the same location as the femto cell. Likewise, services which may not normally be available to a user on the macro network may well be available via the femto base station.

However, previous techniques enabled only limited information to be available to the user to allow them to determine when they are connected to a femto base station and no known mechanism existed to provide the user equipment with information regarding the services that are available from a particular base station. Although femto base stations can broadcast a femto base station name, which the user can then use as an indication that they are attached to a femto cell, the femto base station name is typically a basic text string which can often not be easy to read on the user equipment display. Also, the femto base station name is normally free format which allows for possibilities for each femto base station owner to use similar or the same text. In a highly congested environment, this is likely at best to lead to confusion and, at worst, to give an incorrect indication of the base station that the user equipement is currently supported by. Furthermore, a change in the femto base station name may not be noticeable, particularly if the user is engaged in a call.

Accordingly, in overview, a technique is provided in which triggers are transmitted to the user equipment to enable the end user to have a visual and/or audio and/or other indication of the type of base station coverage and/or the type of services available to their user equipment and/or an indication of other devices attached to the supporting base station. These triggers can be used to change characters shown on the user equipment, the background picture displayed on the user equipment, to provide an audio indication, to display icons, to emit a sound, to cause a vibration, to change the appearance of the user equipment, etc. The triggers may be derived from the successful execution of existing standard procedures such as an attach, radio link set up, radio link reconfiguration, location area update or other indications of relocation to another base station. In another technique, the user equipment monitors for changes in an identifier associated with a base station and, in response to that change, references a look-up table using that identifier and, if a match is found, utilises pre-programmed information typically stored within the user equipment to provide an indication of the base station to which the user equipment is attached.

Figure 3 illustrates schematically the operation of user equipment and a network node according to one embodiment. In this example, user equipment 44 attaches to the femto base station F_{A} from the macro base station 22. However, it will be appreciated that this technique is applicable to any change in the base station supporting the user equipment such as during a macro base station to macro base station handover, a femto base station to femto base station handover or a femto base station to macro base station handover. Also, the technique is also applicable to changes in the base station supporting the user equipment during an idle mode.

In overview, the network detects that a relocation has occurred, optionally determines the identity and/or capabilities of the user equipment, transmits one or more appropriate triggers to the user equipment 44 and the user equipment 44 activates one or more programs in response to those triggers to cause an indication of the relocation to be provided to the user.

At step 1, the user equipment 44 performs a radio resource control (RRC) connection establishment from the macro base station 22 to the femto base station F_{A}.

At step 2, the user equipment 44 performs a location area update request to the network.

At step 3, the network responds by performing a location area update accept.

At step 4, a control message containing one or more triggers and any further message that may be required is transmitted from the network to the user equipment. The triggers to be provided in the control message to the user equipment 44 are determined from the lookup table 200 stored by the network (by the network, it is typically meant one or more network nodes within the network).

The lookup table 200 contains different triggers to be sent to user equipment 44 based on the particular base station which is supporting the user equipment 44 together with, optionally, an indication of the capability or identity of the user equipment 44. For example, should the network determine that the user equipment 44 is now being supported by base station BS₁, then the control message will contain either trigger T₁, T₂ or T₃ depending on the capability of the identity of the user equipment. For example, assuming the user equipment 44 has capability C₁, then the control message will contain the trigger T₁. On receipt of the trigger T₁, the user equipment 44 will activate a process, program or application P₁ which may, for example, cause the user equipment 44 to retrieve predefined information relating to base station BS₁ stored in the user equipment and display this to the user. For example, the information stored relating to BS₁ may indicate that this is an open femto base station provided by a particular organisation which supports various different services. The process P₁ then causes the user equipment 44 to display a logo of that organisation and icons indicating the services provided by the femto base station, together with an audio signal distinctive of that organisation. Similarly, if the network determines from the identity of the base station and the identity of the user equipment 44 that the base station now attached to is the home femto base station for that user, then a trigger may be provided to the user equipment 44 to cause a process to be activated which provides a audio and/or visual indication to the user that the user equipment 44 is attached to its home femto base station, together with an indication of the services available and/or any devices currently attached to that femto base station network.

Other triggers may be provided and the network may determine using the table 200, from the combination of the base station identifier and the user equipment, a trigger which when received by the user equipment 44 activates a corresponding process which causes the user equipment to decode information included in the control message providing information about the base station. On receipt of that message the user equipment 44 activates the process indicated by the trigger and extracts the information already encoded in the control message. It will be appreciated that the extracted information may then be stored by the user equipment 44 for subsequent reuse, if required.

Yet further triggers may be provided and the network may determine using the table 200, from the base station indicator and information relating to the user equipment, to send a trigger to the user equipment to cause that user equipment to activate a further corresponding process which extracts information regarding the base station now supporting the user equipment provided in further messages transmitted subsequent to the control message from the network to the user equipment 44. Such messages may utilise existing short message service (SMS), multimedia message service (MMS) or Internet protocol (IP) data transfers.

Hence, the network can cause the user equipment 44 to display information already contained in its storage or provide information to the user equipment 44 representative of the cell to which it is attached. By downloading information to the user equipment 44, the information representing those cells can be updated within the network whenever required so that different information can be downloaded to the user equipment 44 at any time, without the user equipment 44 itself needing to be modified.

Also, as mentioned above, the range of services available to the user equipment 44 can be indicated. For example, when user equipment 44 attaches to a base station, an indication can be provided of whether that base station supports 2G, 3G, etc, the services available, the data rate supported by that base station and an indication of the other devices that are able to communicate with the user equipment 44. These indications may be provided in the form of icons that can be displayed on the user equipment 44 with each icon representing a type of service, a device or an indication of the data rate supported.

It will be appreciated that each process stored on the user equipment will typically be pre-programmed and known to the network. However, further processes can also be downloaded to the user equipment using the same technique as required by sending a trigger which activates such a download process.

In this example, shown in Figure 3, the user equipment 44 has roamed to a femto base station F_{A} that is provided by a coffee shop. Once the network receives the location area update request from the user equipment 44 via the coffee shop's femto base station F_{A}, a trigger is sent to the user equipment 44 to activate a process which receives information provided by the network which includes a picture of that shop to the user equipment 44 (for example using multi media messaging). Such a picture can also be personalised by the owner of the shop to include information such as special offers, advertisements etc.

Figure 4 illustrates schematically the arrangement of the user equipment 44 when attached to a home femto base station F_{B} (a similar arrangement would be provided in an office environment or for most closed access femto base station arrangements). This example is similar to that described with reference to Figure 3 but the control message incorporating the triggers are now provided by the home femto base station F_{B} rather than from the network. It will be appreciated that other femto base stations other than the home femto base station F_{B} may also provide similar functionality. In this arrangement, when the user equipment 44 has successfully attached to the home femto base station F_{B}, the home femto base station F_{B} recognises that the user equipment 44 is a home user and not a visitor or an unauthorised user equipment. Accordingly, the home femto base station F_{B} enables a local routing function using a local IP access path whereby traffic from the user equipment 44 to other home devices such a PC, TV, etc. is routed locally as shown in Figure 4.

In this example, the femto base station F_{B} provides a control message to the user equipment 44 which contains a trigger to activate a process within the user equipment 44. For example, the trigger may cause the user equipment 44 to decode a subsequent message provided by the femto base station F_{B} which provides information on the devices available for local routing based on network discovery by the femto base station F_{B} and/or by pre-registration of such devices with the femto base station F_{B}. The user equipment 44 will then provide a visual indication (for example, icons) to inform the user of the devices currently routable from the user equipment 44. It will be appreciated that rather than sending a subsequent message including an indication of the devices available for local routing, the control message may contain multiple triggers, each of which activates a process to display pre-defined icons corresponding to the devices known to the femto base station F_{B}. Likewise, each control message may generally contain more than one trigger.

Figure 5 illustrates a technique for providing information relating to the base station to which user equipment 44 is attached according to another embodiment. In this arrangement, the user equipment 44 has loaded thereon information relating to base stations that the user equipment 44 is expected to visit. For example, a user may load a set of pictures onto their user equipment 44, with each picture representing a cell that the user commonly visits. In particular, the user equipment 44 may be loaded with pictures of their home, office, etc. The user equipment 44 may also be loaded with pictures representative of macro base stations. In addition to these pictures, other information may also be stored such as a sound or other audio or visual indicator representative of that base station. The information is then associated with an identifier for that base station in a look-up table.

The user equipment 44 executes a process, program or application that determines when the user equipment has attached to base stations based on, for example, an identifier for that base station. One example of such an identifier is a global cell identifier. The application then indexes the look-up table using the base station identifier to determine whether any pre-loaded information is stored therein. Should information relating to that base station be stored in the look-up table then the application utilises that information to provide an indication to the user. For example, as shown in Figure 5, when the user equipment 44 attaches to the user's home femto base station, the user equipment determines the femto base station's identification is IDₐ. The application refers to the look-up table and utilises information A to provide an audio and/or visual indication to the user. The information A may enable the user equipment 44 to display a picture of the user's home, together optionally with providing an audio indication to the user that the user equipment 44 is now attached to the home femto base station. In addition, specific icons can be displayed such as the data rate that is supported and the devices which the user equipment may connect to.

When the application determines that the user equipment 44 has moved to the macro network, the identifier ID_{b} may be determined for that base station and the user equipment may utilise information B to provide a default indication for that network such as a logo of the network provider and/or any audio indication to the user. It will be appreciated that the information B may be utilised as a default whenever a base station is attached to which is not a femto base station specified in the look-up table. In this way, the user equipment 44 needs only then differentiate between when the user equipment is attached to femto base stations and macro base stations. There would be no need to display specific different pictures representing each macro base station that the user equipment transits through. However, the possibility to do so exists, if required.

As also shown in Figure 5, the user equipment 44 roams to the femto base station provided at the user's office. The application determines the identification ID_{c} for the office femto base station and uses that identification as an index to the look-up table. Accordingly, the information C is utilised to provide an indication to the user that the user equipment 44 is connected to the office femto base station. In addition, the information stored in the look-up table can cause specific icons to be displayed for each location so, for example, if the femto base station deployed in the user's office supports a high data rate, then that rate can also be shown on the user equipment's display. Likewise, the user's home femto base station may have a number of other devices connected to it so when the user equipment attaches to the home femto base station, in addition to displaying a picture to represent that base station, the user equipment can also display icons to represent those devices with which it can now communicate such as, a TV to offload pictures and videos, a printer, a computer or a storage device.

Accordingly, it can be seen that the above techniques provide a user-friendly mechanism to provide additional information regarding the base station currently supporting the user equipment 44. Triggers are interpreted by the user equipment 44 and may be used to trigger an action by the network to provide information on the type of cell that the user equipment is attached to, the radio link in use, functions available and also devices that the user equipment can connect to. Such information can also be used to provide additional benefits, such as advertising.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation; digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A network node method of providing a user of a user equipment with an indication of a base station (22; F_{A} - F_{C}) currently supporting said user equipment (44), said method comprising the steps of:
detecting a mobility event indicating a relocation of said user equipment to said base station; and
in response to said mobility event, transmitting a control message to said user equipment, said control message containing at least one predefined trigger associated with said base station, said at least one predefined trigger causing said user equipment to perform at least one of a plurality of different predefined operating procedures specified by said at least one predefined trigger to provide said indication of said base station to said user wherein one predefined trigger causes said user equipment to perform a predefined operating procedure to receive information providing said indication of said base station to said user wherein said information comprises an indication of other devices supported by said base station with which said user equipment may communicate and said method comprises the step of:
transmitting said information from said network node to said user equipment.

2. The method of claim 1, wherein one predefined trigger causes said user equipment to perform a predefined operating procedure to access information stored in said user equipment providing said indication of said base station to said user.

3. The method of claim 1, wherein said step of transmitting comprises:
transmitting said information from said network node to said user equipment using a messaging service.

4. The method of any preceding claim, wherein one predefined trigger causes said user equipment to perform a predefined operating procedure to extract information contained in said control message to provide said indication of said base station to said user.

5. The method of any preceding claim, comprising the step of:
determining at least one of capabilities of said user equipment and identity of said user equipment and wherein said control message contains at least one predefined trigger associated with at least one of both said base station and said capabilities of said user equipment and both said base station and said identity of said user equipment.

6. The method of any preceding claim, wherein said information comprises at least one of an image representing said base station, an indication of services provided by said base station and an indication of an operator of the base station.

7. A network node operable to provide a user of a user equipment with an indication of a base station (22; F_{A} - F_{C}) currently supporting said user equipment (44), said network node comprising:
detection logic operable to detect a mobility event indicating a relocation of said user equipment to said base station; and
transmission logic operable, in response to said mobility event, to transmit a control message to said user equipment, said control message containing at least one predefined trigger associated with said base station, said at least one predefined trigger causing said user equipment to perform at least one of a plurality of different predefined operating procedures specified by said at least one predefined trigger to provide said indication of said base station to said user, wherein one predefined trigger causes the user equipment to perform a predefined operating procedure to receive information providing the indication of the base station to the user wherein said information comprises an indication of other devices supported by the base station with which the user equipment may communicate and the transmission logic is operable to transmit the information from the network node to the user equipment.

8. A user equipment method of providing a user of said user equipment with an indication of a base station (22; F_{A} - Fc) currently supporting said user equipment (44), said method comprising the steps of:
receiving a control message from a network node in response to a mobility event indicating a relocation of said user equipment to said base station, said control message containing at least one predefined trigger; and
performing at least one of a plurality of different predefined operating procedures specified by said at least one predefined trigger to provide said indication of said base station to said user, wherein the step of performing comprises: performing, in response to one predefined trigger, a predefined operating procedure to receive information providing the indication of the base station to the user wherein said information comprises an indication of other devices supported by the base station with which the user equipment may communicate, the method comprising the step of:
receiving the information from the network node.

9. User equipment (44) operable to provide a user of said user equipment with an indication of a base station (22; F_{A} - Fc) currently supporting said user equipment, said user equipment comprising:
reception logic operable to receive a control message from a network node in response to a mobility event indicating a relocation of said user equipment to said base station, said control message containing at least one predefined trigger; and
processing logic operable to perform at least one of a plurality of different predefined operating procedures specified by said at least one predefined trigger to provide said indication of said base station to said user, wherein the processing logic is operable to perform, in response to one predefined trigger, a predefined operating procedure to receive information providing the indication of the base station to the user wherein said information comprises an indication of other devices supported by the base station with which the user equipment may communicate and the reception logic is operable to receive the information from the network node.

10. A computer program product operable, when executed on a computer, to perform the method steps of any one of claims 1 to 6 and 8.

## Patentansprüche

1. Netzwerkknoten-Verfahren zur Bereitstellung, an einen Nutzer eines Teilnehmergeräts, einer Anzeige einer Basisstation (22; F_{A} - F_{C}), welche momentan das besagte Teilnehmergerät (44) unterstützt, wobei das besagte Verfahren die folgenden Schritte umfasst:
Erkennen eines Mobilitätsereignisses, welches einen Standortwechsel des besagten Teilnehmergeräts zu der besagten Basisstation anzeigt; und
in Reaktion auf das besagte Mobilitätsereignis, Übertragen einer Steuernachricht an das besagte Teilnehmergerät, wobei die besagte Steuernachricht zumindest einen mit der besagten Basisstation assoziierten vordefinierten Trigger enthält, wobei der besagte zumindest eine vordefinierte Trigger bewirkt, dass das besagte Teilnehmergerät mindestens eines einer Vielzahl von unterschiedlichen vordefinierten, durch den besagten zumindest einen vordefinierten Trigger vorgegebenen Betriebsverfahren durchführt, um die besagte Anzeige der besagten Basisstation an den besagten Nutzer bereitzustellen, wobei ein vordefinierter Trigger bewirkt, dass das besagte Teilnehmergerät ein vordefiniertes Betriebsverfahren durchführt, um Informationen, welche die besagte Anzeige der besagten Basisstation an den besagten Nutzer bereitstellen, zu empfangen, wobei die besagten Informationen eine Angabe über andere von der Basisstation unterstützte Vorrichtungen, mit welchen das besagte Teilnehmergerät kommunizieren kann, enthalten, und wobei das besagte Verfahren den folgenden Schritt umfasst:
Übertragen der besagten Informationen von dem besagten Netzwerkknoten an das besagte Teilnehmergerät.

2. Verfahren nach Anspruch 1, wobei ein vordefinierter Trigger bewirkt, dass das besagte Teilnehmergerät ein vordefiniertes Betriebsverfahren durchführt, um auf in dem besagten Teilnehmergerät gespeicherte Informationen, welche die besagte Anzeige der besagten Basisstation an den besagten Nutzer bereitstellen, zuzugreifen.

3. Verfahren nach Anspruch 1, wobei der besagte Schritt des Übertragens umfasst:
Übertragen der besagten Informationen von dem besagten Netzwerkknoten an das besagte Teilnehmergerät unter Verwendung eines Nachrichtendienstes.

4. Verfahren nach einem beliebigen der vorstehenden Ansprüche, wobei ein vordefinierter Trigger bewirkt, dass das besagte Teilnehmergerät ein vordefiniertes Betriebsverfahren durchführt, um in der besagten Steuernachricht enthaltene Informationen zu extrahieren, um die besagte Anzeige der besagten Basisstation an den besagten Nutzer bereitzustellen.

5. Verfahren nach einem beliebigen der vorstehenden Ansprüche, den folgenden Schritt umfassend:
Ermitteln zumindest entweder der Fähigkeiten des besagten Teilnehmergeräts oder der Identität des besagten Teilnehmergeräts, und wobei die besagte Steuernachricht zumindest einen mit mindestens entweder sowohl der besagten Basisstation als auch den besagten Fähigkeiten des besagten Teilnehmergeräts oder sowohl der besagten Basisstation als auch der besagten Identität des besagten Teilnehmergeräts assoziierten vordefinierten Trigger enthält.

6. Verfahren nach einem beliebigen der vorstehenden Ansprüche, wobei die besagten Informationen mindestens eine der folgenden Informationen umfassen: ein Bild, welches die besagte Basisstation darstellt, eine Angabe der von der besagten Basisstation bereitgestellten Dienste, und eine Angabe eines Betreibers der Basisstation.

7. Netzwerkknoten, betriebsfähig für die Bereitstellung einer Anzeige einer Basisstation (22; F_{A} - F_{C}), welche momentan das besagte Teilnehmergerät (44) unterstützt, an einen Nutzer eines Teilnehmergeräts, wobei der besagte Netzwerkknoten umfasst:
Erkennungslogik, betriebsfähig für das Erkennen eines Mobilitätsereignisses, welches einen Standortwechsel des besagten Teilnehmergeräts zu der besagten Basisstation anzeigt; und
Übertragungslogik, betriebsfähig für die Übertragung, in Reaktion auf das besagte Mobilitätsereignis, einer Steuernachricht an das besagte Teilnehmergerät, wobei die besagte Steuernachricht zumindest einen mit der besagten Basisstation assoziierten vordefinierten Trigger enthält, wobei der besagte zumindest eine vordefinierte Trigger bewirkt, dass das besagte Teilnehmergerät mindestens eines einer Vielzahl von unterschiedlichen vordefinierten, durch den besagten zumindest einen vordefinierten Trigger vorgegebenen Betriebsverfahren durchführt, um die besagte Anzeige der besagten Basisstation an den besagten Nutzer bereitzustellen, wobei ein vordefinierter Trigger bewirkt, dass das besagte Teilnehmergerät ein vordefiniertes Betriebsverfahren durchführt, um Informationen, welche die besagte Anzeige der besagten Basisstation an den besagten Nutzer bereitstellen, zu empfangen, wobei die besagten Informationen eine Angabe über andere von der Basisstation unterstützte Vorrichtungen, mit welchen das besagte Teilnehmergerät kommunizieren kann, enthalten, und wobei die Übertragungslogik betriebsfähig ist, um die Informationen von dem Netzwerkknoten an das Teilnehmergerät zu übertragen.

8. Teilnehmergerät-Verfahren zur Bereitstellung, an einen Nutzer des besagten Teilnehmergeräts, einer Anzeige einer Basisstation (22; F_{A} - F_{C}), welche momentan das besagte Teilnehmergerät (44) unterstützt, wobei das besagte Verfahren die folgenden Schritte umfasst:
Empfangen einer Steuernachricht von einem Netzwerkknoten in Reaktion auf ein Mobilitätsereignis, welches einen Standortwechsel des besagten Teilnehmergeräts zu der besagten Basisstation anzeigt, wobei die besagte Steuernachricht zumindest einen vordefinierten Trigger enthält; und
Durchführen mindestens eines einer Vielzahl von unterschiedlichen vordefinierten, durch den besagten zumindest einen vordefinierten Trigger vorgegebenen Betriebsverfahren, um die besagte Anzeige der besagten Basisstation an den besagten Nutzer bereitzustellen, wobei der Schritt des Durchführens umfasst: Durchführen, in Reaktion auf einen vordefinierten Trigger, eines vordefinierten Betriebsverfahrens, um Informationen, welche die besagte Anzeige der besagten Basisstation an den besagten Nutzer bereitstellen, zu empfangen, wobei die besagten Informationen eine Angabe über andere von der Basisstation unterstützte Vorrichtungen, mit welchen das besagte Teilnehmergerät kommunizieren kann, enthalten, wobei das Verfahren den folgenden Schritt umfasst:
Empfangen der Informationen von dem Netzwerkknoten.

9. Teilnehmergerät (44), betriebsfähig für die Bereitstellung einer Anzeige einer Basisstation (22; F_{A} - F_{C}), welche momentan das besagte Teilnehmergerät unterstützt, an einen Nutzer des besagten Teilnehmergeräts, wobei das besagte Teilnehmergerät umfasst:
Empfangslogik, betriebsfähig für den Empfang einer Steuernachricht von einem Netzwerkknoten in Reaktion auf ein Mobilitätsereignis, welches einen Standortwechsel des besagten Teilnehmergeräts zu der besagten Basisstation anzeigt, wobei die besagte Steuernachricht zumindest einen vordefinierten Trigger enthält; und
Verarbeitungslogik, betriebsfähig für das Durchführen mindestens eines einer Vielzahl von unterschiedlichen vordefinierten, durch den besagten zumindest einen vordefinierten Trigger vorgegebenen Betriebsverfahren, um die besagte Anzeige der besagten Basisstation an den besagten Nutzer bereitzustellen, wobei die Verarbeitungslogik betriebsfähig ist, in Reaktion auf einen vordefinierten Trigger ein vordefiniertes Betriebsverfahren durchzuführen, um Informationen, welche eine Anzeige der Basisstation an den Nutzer bereitstellen, zu empfangen, wobei die besagten Informationen eine Angabe über andere von der Basisstation unterstützte Vorrichtungen, mit welchen das besagte Teilnehmergerät kommunizieren kann, enthalten, und wobei die Empfangslogik betriebsfähig ist, um die Informationen von dem Netzwerkknoten zu empfangen.

10. Computerprogramm-Produkt, welches bei dessen Ausführung auf einem Computer betriebsfähig ist, um die Verfahrensschritte gemäß einem beliebigen der Ansprüche 1 bis 6 und Anspruch 8 durchzuführen.

## Revendications

1. Procédé de noeud de réseau pour fournir à un utilisateur d'un équipement utilisateur une indication d'une station de base (22 ; F_{A} à F_{C}) prenant actuellement en charge ledit équipement utilisateur (44), ledit procédé comprenant les étapes suivantes :
détecter un événement de mobilité indiquant une relocalisation dudit équipement utilisateur dans ladite station de base ; et
en réponse audit événement de mobilité, transmettre un message de commande audit équipement utilisateur, ledit message de commande contenant au moins un déclencheur prédéfini associé à ladite station de base, ledit au moins un déclencheur prédéfini entraînant l'exécution par ledit équipement utilisateur d'au moins une procédure parmi une pluralité de procédures de fonctionnement prédéfinies différentes spécifiées par ledit au moins un déclencheur prédéfini pour fournir ladite indication de ladite station de base audit utilisateur, dans lequel un déclencheur prédéfini entraîne l'exécution par ledit équipement utilisateur d'une procédure de fonctionnement prédéfinie pour recevoir des informations fournissant ladite indication de ladite station de base audit utilisateur, dans lequel lesdites informations comprennent une indication d'autres dispositifs pris en charge par ladite station de base avec laquelle ledit équipement utilisateur peut communiquer, et ledit procédé comprend l'étape suivante :
transmettre lesdites informations à partir dudit noeud de réseau audit équipement utilisateur.

2. Procédé selon la revendication 1, dans lequel un déclencheur prédéfini entraîne l'exécution par ledit équipement utilisateur d'une procédure de fonctionnement prédéfinie pour accéder à des informations stockées dans ledit équipement utilisateur fournissant ladite indication de ladite station de base audit utilisateur.

3. Procédé selon la revendication 1, dans lequel ladite étape de transmission comprend l'étape suivante : transmettre lesdites informations à partir dudit noeud de réseau audit équipement utilisateur au moyen d'un service de messagerie.

4. Procédé selon l'une quelconque des revendications précédentes, dans lequel un déclencheur prédéfini entraîne l'exécution par ledit équipement utilisateur d'une procédure de fonctionnement prédéfinie pour extraire des informations contenues dans ledit message de commande pour fournir ladite indication de ladite station de base audit utilisateur.

5. Procédé selon l'une quelconque des revendications précédentes, comprenant l'étape suivante :
déterminer au moins une des capacités dudit équipement utilisateur et l'identité dudit équipement utilisateur et dans lequel ledit message de commande contient au moins un déclencheur prédéfini associé à ladite station de base et lesdites capacités dudit équipement utilisateur et/ou à ladite station de base et ladite identité dudit équipement utilisateur.

6. Procédé selon la revendication précédente, dans lequel lesdites informations comprennent au moins un élément parmi une image représentant ladite station de base, une indication de services fournie par ladite station de base et une indication d'un opérateur de la station de base.

7. Noeud de réseau permettant de fournir à un utilisateur d'un équipement utilisateur une indication d'une station de base (22 ; F_{A} à F_{C}) prenant actuellement en charge ledit équipement utilisateur (44), ledit noeud de réseau comprenant :
une logique de détection permettant de détecter un événement de mobilité indiquant une relocalisation dudit équipement utilisateur dans ladite station de base ; et
une logique de transmission permettant, en réponse audit événement de mobilité, de transmettre un message de commande audit équipement utilisateur, ledit message de commande contenant au moins un déclencheur prédéfini associé à ladite station de base, ledit au moins un déclencheur prédéfini entraînant l'exécution par ledit équipement utilisateur d'au moins une procédure parmi une pluralité de procédures de fonctionnement prédéfinies différentes spécifiées par ledit au moins un déclencheur prédéfini pour fournir ladite indication de ladite station de base audit utilisateur, dans lequel un déclencheur prédéfini entraîne l'exécution par ledit équipement utilisateur d'une procédure de fonctionnement prédéfinie pour recevoir des informations fournissant l'indication de la station de base à l'utilisateur, dans lequel lesdites informations comprennent une indication d'autres dispositifs pris en charge par ladite station de base avec laquelle l'équipement utilisateur peut communiquer, et la logique de transmission permet de transmettre les informations entre le noeud réseau et l'équipement utilisateur.

8. Procédé d'équipement utilisateur pour fournir à un utilisateur dudit équipement utilisateur une indication d'une station de base (22 ; F_{A} à F_{C}) prenant actuellement en charge ledit équipement utilisateur (44), ledit procédé comprenant les étapes suivantes :
recevoir un message de commande à partir d'un noeud de réseau en réponse à un événement de mobilité indiquant une relocalisation dudit équipement utilisateur dans ladite station de base, ledit message de commande contenant au moins un déclencheur prédéfini ; et
exécuter au moins une procédure parmi une pluralité de procédures de fonctionnement prédéfinies différentes spécifiées par ledit au moins un déclencheur prédéfini pour fournir ladite indication de ladite station de base audit utilisateur, dans lequel l'étape d'exécution comprend l'étape suivante : exécuter, en réponse à un déclencheur prédéfini, une procédure de fonctionnement prédéfinie pour recevoir des informations fournissant l'indication de la station de base à l'utilisateur dans lequel lesdites informations comprennent une indication d'autres dispositifs pris en charge par la station de base avec laquelle l'équipement utilisateur peut communiquer, le procédé comprenant l'étape suivante : recevoir les informations à partir du noeud de réseau.

9. Équipement utilisateur (44) permettant de fournir à un utilisateur dudit équipement utilisateur une indication d'une station de base (22 ; F_{A} à F_{C}) prenant actuellement en charge ledit équipement utilisateur, ledit équipement utilisateur comprenant :
une logique de réception permettant de recevoir un message de commande à partir d'un noeud de réseau en réponse à un événement de mobilité indiquant une relocalisation dudit équipement utilisateur dans ladite station de base, ledit message de commande contenant au moins un déclencheur prédéfini ; et
une logique de traitement permettant d'exécuter au moins une procédure parmi une pluralité de procédures de fonctionnement prédéfinies différentes spécifiées par ledit au moins un déclencheur prédéfini pour fournir ladite indication de ladite station de base audit utilisateur, dans lequel la logique de traitement permet d'exécuter, en réponse à un déclencheur prédéfini, une procédure de fonctionnement prédéfinie pour recevoir des informations fournissant l'indication de la station de base à l'utilisateur, dans lequel lesdites informations comprennent une indication d'autres dispositifs pris en charge par la station de base avec laquelle ledit équipement utilisateur peut communiquer et la logique de réception permet de recevoir les informations à partir du noeud de réseau.

10. Produit de programme informatique permettant, lorsqu'il est exécuté sur un ordinateur, d'exécuter les étapes du procédé selon l'une quelconque des revendications 1 à 6 et 8.
